# EUROPÄISCHE PATENTSCHRIFT

(11) **EP 2 776 308 B1**
(45) Veröffentlichungstag und Bekanntmachung des Hinweises auf die Patenterteilung: **02.11.2016**
(21) Anmeldenummer: 12778197.9
(22) Anmeldetag: 26.09.2012
(51) Int. Cl.: B62M 6/55

(54) **MUSKELKRAFTBETRIEBENES FAHRZEUG MIT HILFSMOTOR SOWIE GETRIEBE UND ANTRIEBSEINHEIT HIEFÜR**
MUSCLE-POWERED VEHICLE HAVING AN AUXILIARY MOTOR, AND TRANSMISSION AND DRIVE UNIT THEREFOR
VÉHICULE ENTRAÎNÉ PAR LA FORCE MUSCULAIRE COMPRENANT UN MOTEUR AUXILIAIRE, ET TRANSMISSION ET UNITÉ D'ENTRAÎNEMENT POUR LEDIT VÉHICULE

(30) Priorität: 10.11.2011 AT 16632011
(43) Veröffentlichungstag der Anmeldung: 17.09.2014
(73) Patentinhaber: BionX Europe GmbH, 8160 Weiz (AT)
(72) Erfinder: GINGL, Manfred, Aurora, Ontario L4G 747 (CA); PALVÖLGYI, Sandor, A-8200 Ungersdorf/Gleisdorf (AT)
(74) Vertreter: Weiser, Andreas
(86) Internationale Anmeldenummer: PCT/AT2012/050146
(87) Internationale Veröffentlichungsnummer: WO 2013/067566

(56) Entgegenhaltungen:
- EP-A1- 0 636 538
- EP-A1- 0 820 925
- EP-A1- 0 861 770
- EP-A1- 0 908 379
- EP-A1- 1 070 660
- US-B1- 6 230 586

## Beschreibung

Die vorliegende Erfindung betrifft ein Getriebe und eine Antriebseinheit für ein muskelkraftbetriebenes Fahrzeug mit Hilfsmotor, insbesondere Pedelec, mit einem am Fahrzeug montierbaren Gehäuse und darin gelagert einer ersten Antriebswelle zum Einspeisen von Muskelkraft, welche mit einer etwa koaxialen Abtriebswelle zum Antreiben des Fahrzeugs gekuppelt ist, und etwa in rechtem Winkel dazu einer zweiten Antriebswelle zum Anschließen des Hilfsmotors, die über ein Winkelgetriebe ebenfalls auf die Abtriebswelle wirkt. Die Erfindung betrifft weiters ein muskelkraftbetriebenes Fahrzeug mit einer solchen Antriebseinheit.

Bei muskelkraftbetriebenen Fahrzeugen mit Hilfsmotor sollen Muskelkraft- und Hilfsmotorantrieb wahlweise sowohl unabhängig voneinander als auch gemeinsam, einander unterstützend den Antrieb des Fahrzeugs bewirken können. Handelt es sich bei dem Fahrzeug um ein Fahrrad mit elektrischem Hilfsmotor, wird es auch als "Pedelec" bezeichnet. Beispielsweise sind Pedelecs mit Radnaben-Hilfsmotoren bekannt, die über herkömmliche Tretkurbeln (Pedale) und Kettenantrieb auch mit Muskelkraft betrieben werden können. Da solche Radnaben-Hilfsmotoren aufgrund der geringen Drehzahl der Räder ein vergleichsweise hohes Drehmoment aufbringen müssen, bauen sie groß und schwer.

Die WO 2011/113642 zeigt ein Fahrrad mit Hilfsmotor, bei dem sowohl die Pedale als auch der Hilfsmotor über jeweils ein Getriebe auf eine gemeinsame Abtriebswelle wirken, von welcher ein Kettenantrieb das Rad treibt. Die Achsen aller Getriebe- und Antriebsteile stehen dabei zueinander parallel. Durch das zwischengeschaltete Getriebe kann der Motor zwar kleiner sein, doch kommt aufgrund des schmalen Raums zwischen den beiden Pedalen ein Motor herkömmlicher Bauart aufgrund seiner Baulänge kaum in Frage; ein dafür besser geeigneter Scheibenläufermotor, wie er auch in Radnabenmotorantrieben eingesetzt wird, ist aber entweder eisenkernlos und somit weniger effizient oder an seinem Rotorumfang mit Permanentmagneten ausgestattet und deshalb relativ schwer.

Ein Getriebe der einleitend genannten Art ist in der EP 1 878 650 beschrieben. Diese Schrift offenbart einen in den Fahrzeugrahmen integrierten, länglichen Hilfsmotor, der über ein Winkelgetriebe auf die Kurbelwelle wirkt, an welcher auch die Pedale sitzen. Auch die EP 0 820 925 zeigt ein Getriebe gemäß dem Oberbegriff des Anspruchs 1 mit einem Winkelgetriebe.

Das Winkelgetriebe der beiden genannten Schriften ist ein Kegelradgetriebe, was die Ersteinstellung des Pedelecs bei der Fertigung und die Nachjustierung des Getriebes im Gebrauch erschwert: So hat bei Kegelradgetrieben die Einstellung des Getriebespiels an beiden Wellen in deren beiden Achsrichtungen zu erfolgen und ist deshalb nicht auf einfache Weise zu bewerkstelligen.

Die vorliegende Erfindung setzt sich zum Ziel, ein platzsparendes, leichtgewichtiges Getriebe für muskelkraft- und hilfsmotorbetriebene Fahrzeuge zu schaffen, welches auf einfache Weise eingestellt und nachjustiert werden kann.

Dieses Ziel wird gemäß einem ersten Aspekt der Erfindung mit einem Getriebe der einleitend genannten Art erreicht, bei welchem das Winkelgetriebe durch ein Kronenrad an der Abtriebswelle und ein darin eingreifendes Ritzel an der zweiten Antriebswelle gebildet ist. Durch die Verwendung eines Kronenrads wird ein Winkelgetriebe mit großer Untersetzung und somit ein einstufiges Getriebe möglich; schwergewichtige weitere Getriebestufen und -teile entfallen. Der Hilfsmotor kann normal zur Abtriebswelle stehen und findet auch bei herkömmlicher Bauform Platz zwischen den Pedalen. Das Kronenrad erlaubt auf ganz einfache Weise das Einstellen und spätere Nachjustieren des Getriebespiels durch Verstellung alleine des Kronenrads in dessen Axialrichtung oder alleine des Ritzels normal zu dessen Axialrichtung; eine Verstellbarkeit des jeweils anderen Teils des Winkelgetriebes ist dazu nicht notwendig.

Besonders vorteilhaft ist es, wenn die erste und die zweite Antriebswelle im Gehäuse drehbar gelagert und axial festgelegt sind und die Abtriebswelle eine Hohlwelle ist, die von der ersten Antriebswelle durchsetzt ist, auf welcher sie axial verschieblich gelagert und mit dieser in zumindest einer Drehrichtung drehfest gekuppelt ist. Ein solcher Getriebeaufbau ist besonders kompakt und ergibt durch die direkte Kupplung der ersten Antriebswelle mit der Abtriebswelle ein gewohntes Gefühl im Muskelkraftbetrieb. Die axial festgelegte Gehäuselagerung der beiden Antriebswellen ermöglicht dabei einen besonders einfachen Aufbau des Getriebes. Zum Justieren des Getriebespiels braucht lediglich die Abtriebswelle mit dem Kronenrad axial verschoben zu werden; wenn z.B. ein Kettenrad für einen Kettenantrieb direkt auf der Abtriebswelle sitzt, kann diese geringe axiale Verschiebung einfach durch die Kette ausgeglichen werden.

Vorteilhaft ist es, wenn die Abtriebswelle zusätzlich am Gehäuse drehbar und axial verschieblich abgestützt ist. Durch ein solches zweites Lager wird eine hohe mechanische Stabilität der Wellenlagerung erzielt.

Weiters ist es besonders günstig, wenn die Lagerung und Kupplung der Abtriebswelle an und mit der ersten Antriebswelle durch einen ersten Freilauf mit Wälzlagern und axialem Spiel gebildet ist. Dadurch kann einerseits Muskelkraft direkt in die Abtriebswelle eingespeist werden, anderseits kann sich die Abtriebswelle auch ohne Mitbewegen der Tretkurbeln drehen. Muskelkraft- und Hilfsmotorbetrieb können so unabhängig voneinander auf die gemeinsame Abtriebswelle wirken. Das axiale Spiel verleiht dem Kronenrad dazu die nötige Bewegungsfreiheit zum Justieren.

Für die Justierung des Kronenrads ist es besonders günstig, wenn ein an der ersten Antriebswelle in Axialrichtung einstellbar gelagerter Stellring über ein Axiallager an der dem Ritzel abgewandten Seite des Kronenrades angreift. Ein solcher Stellring, der rundum gleichmäßig auf das Kronenrad wirkt, erlaubt dessen Verschieben in Axialrichtung und vermeidet dabei ein Verklemmen oder Verkeilen. Das zwischenliegende Axiallager gleicht Relativbewegungen zwischen Kronenrad und Stellring aus. Um ein gleichmäßiges Aufliegen des Kronenrads am Stellring sicherzustellen, ist es dabei besonders vorteilhaft, wenn das Kronenrad gegen den Stellring federbeaufschlagt ist. So kann mit einem einzelnen Stellring das Kronenrad in beiden Axialrichtungen definiert justiert werden.

Gemäß einer weiteren vorteilhaften Ausgestaltung der Erfindung wirkt eine Justierschraube, welche in einer stirnseitigen Bohrung der ersten Antriebswelle sitzt, über einen in einem Querschlitz der ersten Antriebswelle beweglichen Bolzen auf die Stirnseite des Stellrings. Dies erlaubt das Justieren des Kronenrads und somit des gesamten Getriebes mit einer einzigen Schraube und herkömmlichem Werkzeug. Eine solche Justierschraube kann überdies besonders einfach von außen zugänglich gemacht werden, wenn sie bevorzugt in derselben Bohrung sitzt, welche zur Verankerung einer Tretkurbel an der ersten Antriebswelle verwendet wird. In diesem Fall bedarf es keiner separaten Bohrung und zum Justieren des Kronenrads braucht lediglich die Montageschraube der Tretkurbel abgenommen zu werden, um Zugang zur Justierschraube zu erhalten.

In einem zweiten Aspekt schafft die Erfindung eine Antriebseinheit für ein muskelkraftbetriebenes Fahrzeug mit Hilfsmotor, insbesondere Pedelec, mit einem Getriebe der geschilderten Art und einem an die zweite Antriebswelle koaxial angeschlossenen Hilfsmotor. Eine solche Antriebseinheit ermöglicht den Einsatz eines Hilfsmotors herkömmlicher Bauart und das Summieren von Muskelkraft und Hilfsmotorkraft mit all den geschilderten Vorteilen der Erfindung.

Bevorzugt ist zwischen der zweiten Antriebswelle und dem Hilfsmotor ein zweiter Freilauf angeordnet. Dadurch wird der Motor im reinen Muskelkraftbetrieb nicht mitgedreht. Muskelkraft und Hilfsmotor wirken voneinander unabhängig auf die Abtriebswelle; jeder der beiden kann stillstehen, wenn der jeweils andere Antrieb alleine aktiv sein soll.

Vorteilhaft ist es, wenn der Hilfsmotor als Hohlwellenmotor ausgeführt ist, welcher von der zweiten Antriebswelle durchsetzt ist. Der Hilfsmotor kann so auf die zweite Antriebswelle aufgezogen werden und diese zusätzlich lagern. Optional kann dabei der zweite Freilauf in der Hohlwelle des Hilfsmotors liegen und so den Hilfsmotor an die zweite Antriebswelle anschließen. Dies ermöglicht eine besonders kompakte Bauweise; weitere separate Zwischenlager oder Flansche für den zweiten Freilauf sind nicht erforderlich.

Besonders vorteilhaft ist es, wenn das Motorgehäuse durch eine Öffnung Zugriff auf das dem Ritzel abgewandte Ende der zweiten Antriebswelle bietet. Durch eine solche Öffnung kann das Spiel des Winkelgetriebes direkt an der zweiten Antriebswelle gemessen werden, indem beispielsweise ein Werkzeug durch die Öffnung im Motorgehäuse hindurch mit der zweiten Antriebswelle formschlüssig verbunden wird. Durch Drehen des Werkzeugs ist in der Folge das Zahnspiel des Ritzels an den Zähnen des Kronenrads messbar bzw. ertastbar; dadurch kann die Notwendigkeit eines Nachstellens detektiert oder das eingestellte Spiel während des Justiervorgangs überwacht werden.

Günstig ist es, wenn die erste Antriebswelle an ihren beiden Enden in an sich bekannter Weise jeweils mit einer Tretkurbel zum Einspeisen von Muskelkraft und die Abtriebswelle mit einem Kettenrad für einen Kettentrieb ausgestattet ist. Dadurch kann die Antriebseinheit mit einem herkömmlichen Pedal- und Kettentrieb kombiniert werden.

In einem dritten Aspekt schafft die Erfindung ein muskelkraftbetriebenes Fahrzeug mit Hilfsmotor, insbesondere Pedelec, mit einem Rahmen und einem daran montierten Tretlager für Tretkurbeln zum Einspeisen von Muskelkraft, welches durch eine Antriebseinheit der hier vorgestellten Art gebildet ist. Bestehende Fahrzeugkonstruktionen können damit weitgehend unverändert bleiben; auch viele weitere mechanische Antriebselemente am Fahrzeug, z.B. Ketten- oder Nabenschaltung, können beibehalten werden. Auch eine einfache Nachrüstung bestehender Fahrzeuge mit einem Getriebe bzw. einer Antriebseinheit gemäß der Erfindung ist möglich.

Die Erfindung wird nachfolgend anhand von in den beigeschlossenen Zeichnungen dargestellten Ausführungsbeispielen näher erläutert. In den Zeichnungen zeigt:
Fig. 1 ein muskelkraftbetriebenes Fahrzeug mit Hilfsmotor gemäß der Erfindung in Seitenansicht;
Fig. 2 die Antriebseinheit des Fahrzeugs von Fig. 1 im Schnitt; und
Fig. 3 Details des Winkelgetriebes der Antriebseinheit von Fig. 2 in einer Perspektivansicht.

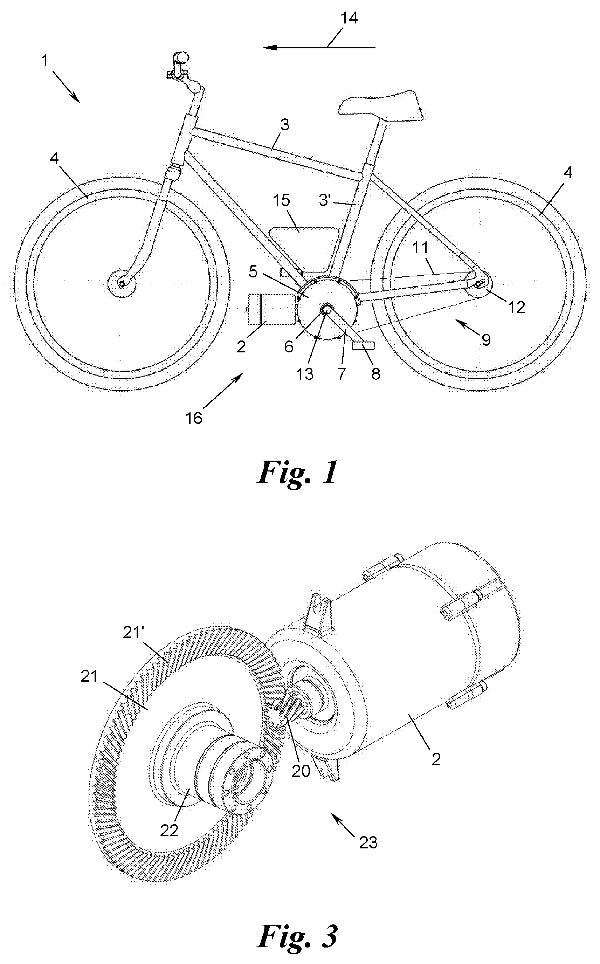

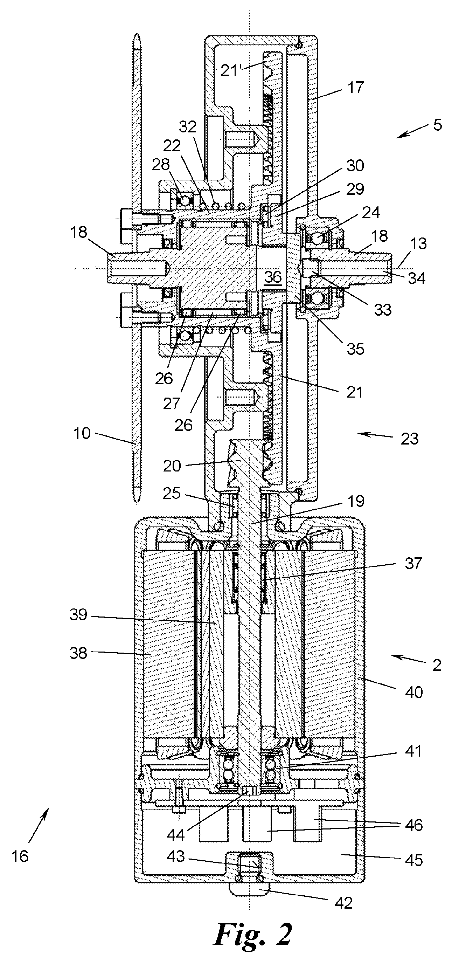

Gemäß Fig. 1 weist ein muskelkraftbetriebenes Fahrzeug 1 mit Hilfsmotor 2, hier ein Fahrrad mit Elektro-Hilfsmotor, ein sogenanntes "Pedelec", einen Rahmen 3 und zwei Räder 4 auf. Am Rahmen 3 ist ein Getriebe 5 befestigt, welches gleichzeitig als Tretlager 6 für jeweils eine Tretkurbel 7 mit einem Pedal 8 an jeder Seite des Fahrzeugs 1 zum Einspeisen von Muskelkraft dient. Ein Kettentrieb 9 mit einem vom Getriebe 5 angetriebenen Kettenrad 10 (Fig. 2), einer Kette 11 und einem Kettenritzel 12 am Rad 4 überträgt die Muskelkraft vom Getriebe 5 auf das Rad 4 und somit auf das Fahrzeug 1.

Zusätzliche Kraft speist der Hilfsmotor 2 ins Getriebe 5 ein. Die Kraft des Hilfsmotors 2 wird ebenfalls über den Kettentrieb 9 auf das Fahrzeug 1 übertragen. Wie Fig. 1 zeigt, ist der Hilfsmotor 2 normal zur Achse 13 des Tretlagers 6 der Tretkurbeln 7 am Getriebe 5 montiert und kragt etwa parallel zur Fahrtrichtung 14 des Fahrzeugs 1 aus dem Getriebe 5 aus, kann aber auch schräg oder vertikal, z.B. parallel zum oder am/im Sattelstützenrohr 3' des Rahmens 3 liegen. Darüber hinaus ist am Rahmen 3 auch ein Energiespeicher 15 zur Versorgung des Hilfsmotors 2 befestigt.

Das Fahrzeug 1 könnte anstelle eines Fahrrads alternativ auch ein muskelkraftbetriebenes Liegerad, Tandem, Dreirad etc. mit Hilfsmotor sein. Es könnte sich dabei auch um ein muskelkraftbetriebenes Wasserfahrzeug mit Hilfsmotor, z.B. ein Tretboot, handeln. Außerdem könnten die Tretkurbeln 7 anstatt für Fußbetrieb auch für Handbetrieb ausgelegt sein, gegebenenfalls sogar für Einhandbetrieb, z.B. auch über einen Handhebel, und das Fahrzeug 1 dabei ein Rollstuhl oder dergleichen sein. An die Stelle des Kettentriebs 9 könnte auch ein dem Fachmann bekannter Riementrieb oder Kardantrieb treten. Es könnte sogar anstelle des dargestellten elektrischen Hilfsmotors 2 eine Wärmekraftmaschine eingesetzt werden, in welchem Fall der Energiespeicher 15 statt einer Batterie für einen Elektromotor den Kraftstoff für die Wärmekraftmaschine enthielte.

Die Fig. 2 und 3 zeigen Aufbau und Funktion der aus Hilfsmotor 2 und Getriebe 5 gebildeten Antriebseinheit 16 im Detail. In einem Gehäuse 17 des Getriebes 5 ist eine erste Antriebswelle 18 gelagert, welche die Tretlagerachse 13 bildet und an deren beiden Enden jeweils eine Tretkurbel 7 (Fig. 1) angreift. Eine etwa normal zur ersten Antriebswelle 18 verlaufende und ebenfalls im Gehäuse 17 gelagerte zweite Antriebswelle 19 speist die Kraft des Hilfsmotors 2 in das Getriebe 5 ein. Die zweite Antriebswelle 19 verfügt über ein Ritzel 20, das in ein Kronenrad 21 eingreift, d.h. mit dessen Zähnen 21' kämmt. Das Kronenrad 21 sitzt direkt auf der Abtriebswelle 22 des Getriebes 5, welche das Kettenrad 10 trägt.

Die zweite Antriebswelle 19 mit dem Ritzel 20 und die Abtriebswelle 22 mit dem Kronenrad 21 bilden ein Winkelgetriebe 23 in Form eines Kronenradgetriebes, welches in Fig. 3 freigestellt ist. Charakteristisch für ein solches Kronenradgetriebe sind neben dem meist rechten Winkel zwischen Antriebs- und Abtriebswelle - hier der zweiten Antriebswelle 19 und der Abtriebswelle 22 - die etwa zylindrische Form des Ritzels 20 und die Anordnung der Zähne 21' an einer Seitenfläche des Kronenrads 21. Das Winkelgetriebe 23 ist dadurch unempfindlich gegenüber einer Axialverschiebung des Ritzels 20 und für die Einstellung des Spiels zwischen Ritzel 20 und Kronenrad 21 genügt eine einachsige Bewegung, z.B. des Kronenrads 21 in seiner Axialrichtung. Das Kronenradgetriebe 23 ist gleichzeitig effizienter als Schnecken- oder Hypoidgetriebe. Alle in der Technik für Kronenradgetriebe an sich bekannten Verzahnungen zwischen Ritzel 20 und Kronenrad 21 können dabei eingesetzt werden, z.B. gerade oder wie in Fig. 3 dargestellt schräge Verzahnungen in Evolventen-, Zykloid- oder anderen konjugierten Geometrien. Es können auch andere als normale Achswinkel vorgesehen werden, und auch ein Achsversatz zwischen zweiter Antriebswelle 19 und Abtriebswelle 22 ist möglich.

Zurückkommend auf Fig. 2 ist die erste Antriebswelle 18 in (zumindest) einem ersten Festlager 24 und die zweite Antriebswelle 19 in (zumindest) einem zweiten Festlager 25 gegenüber dem Gehäuse 17 drehbar gelagert und axial festgelegt. Die Abtriebswelle 22 ist als Hohlwelle ausgeführt und wird von der ersten Antriebswelle 18 durchsetzt. Dabei ist die Abtriebswelle 22 auf der ersten Antriebswelle 18 in Wälzlagern 26 mit axialem Spiel gelagert und mit dieser über einen ersten Freilauf 27 in Antriebsrichtung drehfest gekuppelt. Die genaue Wirkungsweise des ersten Freilaufs 27 wird weiter unten eingehend erläutert. Ein optionales Loslager 28 stützt die Abtriebswelle 22 axialverschieblich und drehbar am Gehäuse 17 des Getriebes 5 ab.

An die Stelle der Wälzlager 26 könnten auch ein oder mehrere Gleitlager treten, welche ein axiales Spiel zulassen. Auch ist der erste Freilauf 27 optional; eine in beide Richtungen drehfeste Kupplung zwischen erster Antriebswelle 18 und Abtriebswelle 22 wäre möglich, wenngleich weniger komfortabel, wie weiter unten genauer ausgeführt. Der Aufbau des Getriebes könnte dann sogar weiter vereinfacht werden, indem die erste Antriebswelle 18 und Abtriebswelle 22 in einem Stück ausgeführt werden; in diesem Fall müsste jedoch eine solche Welle als ganzes im Gehäuse 17 axialverschieblich sein.

Durch die axiale Verschieblichkeit der Abtriebswelle 22 mit dem Kronenrad 21 gegenüber dem Gehäuse 17 und damit gegenüber dem Ritzel 20 kann das Spiel zwischen Ritzel 20 und Kronenrad 21 eingestellt werden. Dazu dient ein Stellring 29. Der Stellring 29 ist an der ersten Antriebswelle 18 in Axialrichtung einstellbar gelagert und greift über ein Axiallager 30 an der den Zähnen 21' abgewandten Seite des Kronenrads 21 an. Beim Verstellen des Stellrings 29 in Axialrichtung wird damit das Kronenrad 21 verstellt und so das Spiel des Winkelgetriebes 23 verändert. Eine auf die Abtriebswelle 22 aufgezogene und gegenüber dem Gehäuse 17 bzw. dem Loslager 28 abgestützte Druckfeder 32 hält dabei das Kronenrad 21 gegen den Stellring 29 bzw. das zwischenliegende Axiallager 30. Alternativ oder ergänzend zur Druckfeder 32 könnte der Stellring 29 von einem Mitnehmer am Kronenrad 21 hintergriffen werden und so das Kronenrad 21 in beiden Richtungen justieren.

Der Stellring 29 kann beispielsweise mit einem Innengewinde ausgestattet und auf einem Außengewinde der ersten Antriebswelle 18 durch Verdrehen axial verstellt werden. Alternativ könnte der Stellring 29 auch am Gehäuse 17 z.B. mittels das Gehäuse 17 durchsetzender Schrauben justierbar sein und dabei entweder die erste Antriebswelle 18 nicht berühren oder auf dieser in einem weiteren Wälzlager mit axialem Spiel gelagert sein.

In dem in Fig. 2 dargestellten Fall wird der Stellring 29 mittels einer Justierschraube (Wurmschraube) 33 verstellt, die in einer stirnseitigen Gewindebohrung 34 der ersten Antriebswelle 18 sitzt und über einen Bolzen 35, der in einem Querschlitz 36 der ersten Antriebswelle 18 in deren Axialrichtung beweglich gelagert ist, auf die Stirnseite des Stellrings 29 wirkt. Alternativ könnten auch zwei oder mehrere Schrauben zum Verstellen des Stellrings 29 in zwei oder mehreren Bohrungen der ersten Antriebswelle 18 sitzen oder die Justierschraube 33 z.B. in einem abgesetzten Gewindeteil innerhalb der Bohrung 34 liegen und nicht als Wurmschraube ausgeführt sein.

Bei der Ausführungsform nach Fig. 2 sind Kronenrad 21 und Abtriebswelle 22 in einem Stück gefertigt. Sie könnten jedoch, sofern sie miteinander zumindest drehfest verbunden sind, auch zwei- oder mehrteilig sein. Dabei könnte die Abtriebswelle 22 z.B. gegenüber dem Gehäuse axial festgelegt und lediglich das Kronenrad 21 auf der Abtriebswelle 22 oder im Gehäuse 17 axial verschieblich gelagert sein.

Der Hilfsmotor 2 ist über einen (optionalen) zweiten Freilauf 37 an die zweite Antriebswelle 19 angeschlossen. Die beiden Freiläufe 27, 37 sind so ausgerichtet, dass die beiden Antriebswellen 18, 19 die Abtriebswelle 22 jeweils unabhängig voneinander antreiben können, sodass im Hilfsmotorbetrieb die Pedale 8 stillstehen können und im Muskelkraftbetrieb der Hilfsmotor 2.

Gemäß Fig. 2 ist der Hilfsmotor 2 bevorzugt als Hohlwellenmotor mit einem Stator 38 und einem Rotor 39 und mit einem eigenen Gehäuse 40 ausgeführt und wird von der aus dem Gehäuse 17 des Getriebes 5 auskragenden zweiten Antriebswelle 19 durchsetzt, welche sich an ihrem Ende in einem weiteren Wälzlager 41 des Motorgehäuses 40 abstützen kann. Wenn zwei Lager 25, 41 für die zweite Antriebswelle 19 vorgesehen sind, dann ist zumindest eines davon ein Loslager, z.B. das Lager 25.

Das dem Ritzel 20 abgewandte Ende der zweiten Antriebswelle 19 ist bevorzugt über eine - gegebenenfalls mit einem Stopfen 42 verschließbare - Öffnung 43 im Motorgehäuse 40 von außen zugänglich. An dieser Stelle verfügt die zweite Antriebswelle 19 über eine Ausformung 44, z.B. einen Innensechskant, Schlitz, Kreuzschlitz, Außensechskant etc., zum formschlüssigen Angriff eines durch die Öffnung 43 einführbaren (nicht dargestellten) Werkzeugs: Durch Drehen dieses Werkzeugs kann das Spiel des Winkelgetriebes 23 zwischen den Zähnen des Ritzels 20 und des Kronenrads 21 gemessen oder ertastet werden, während es über die Justierschraube 33 eingestellt wird. Die Ausformung 44 könnte auch entfallen, wenn ein kraftschlüssiges Werkzeug verwendet wird.

Anstelle über die Öffnung 43 könnte die zweite Antriebswelle 19 auch von der Seite her, z.B. im Bereich der Anflanschung des Hilfsmotor-Gehäuses 40 am Getriebe-Gehäuse 17, für diese Zwecke zugänglich sein, beispielsweise für den Angriff eines Schraubenschlüssels. Diese Ausführungsform eignet sich besonders für den Fall, dass die zweite Antriebswelle 19 nur bis zu dieser Stelle reicht und dort an eine (nicht dargestellte) Ausgangswelle des Hilfsmotors 2 gekuppelt oder angeflanscht wird.

In einem dem Getriebe 5 abgewandten Bereich des Motorgehäuses 40 kann ein Freiraum 45 zur Aufnahme von Motorelektronik 46 vorgesehen sein. Die Motorelektronik 46 könnte alternativ im Energiespeicher 15 z.B. zusammen mit einer Ladeelektronik für das Aufladen von Batterien oder zusammen mit einer (nicht dargestellten) Bedieneinheit beispielsweise am Rahmen 3 des Fahrzeugs 1 sitzen.

Die Erfindung ist nicht auf die dargestellten Ausführungsformen beschränkt, sondern umfasst alle Varianten, Kombinationen und Modifikationen, die in den Rahmen der angeschlossenen Ansprüche fallen.

## Patentansprüche

1. Getriebe (5) für ein muskelkraftbetriebenes Fahrzeug (1) mit Hilfsmotor (2), insbesondere Pedelec, mit einem am Fahrzeug (1) montierbaren Gehäuse (17) und darin gelagert einer ersten Antriebswelle (18) zum Einspeisen von Muskelkraft, welche mit einer etwa koaxialen Abtriebswelle (22) zum Antreiben des Fahrzeugs (1) gekuppelt ist, und etwa in rechtem Winkel dazu einer zweiten Antriebswelle (19) zum Anschließen des Hilfsmotors, die über ein Winkelgetriebe (23) ebenfalls auf die Abtriebswelle (22) wirkt, **dadurch gekennzeichnet, dass** das Winkelgetriebe (23) durch ein Kronenrad (21) an der Abtriebswelle (22) und ein darin eingreifendes Ritzel (20) an der zweiten Antriebswelle (19) gebildet ist.

2. Getriebe nach Anspruch 1, **dadurch gekennzeichnet, dass** die erste und die zweite Antriebswelle (18, 19) im Gehäuse (17) drehbar gelagert und axial festgelegt sind, und dass die Abtriebswelle (22) eine Hohlwelle ist, die von der ersten Antriebswelle (18) durchsetzt ist, auf welcher sie axial verschieblich gelagert und mit dieser in zumindest einer Drehrichtung drehfest gekuppelt ist.

3. Getriebe nach Anspruch 2, **dadurch gekennzeichnet, dass** die Abtriebswelle (22) zusätzlich am Gehäuse (17) drehbar und axial verschieblich abgestützt ist.

4. Getriebe nach Anspruch 2 oder 3, **dadurch gekennzeichnet, dass** die Lagerung und Kupplung der Abtriebswelle (22) an und mit der ersten Antriebswelle (18) durch einen ersten Freilauf (27) mit Wälzlagern (26) und axialem Spiel gebildet ist.

5. Getriebe nach einem der Ansprüche 1 bis 4, **dadurch gekennzeichnet, dass** ein an der ersten Antriebswelle (18) in Axialrichtung einstellbar gelagerter Stellring (29) über ein Axiallager (30) an der dem Ritzel (20) abgewandten Seite des Kronenrades (21) angreift.

6. Getriebe nach Anspruch 5, **dadurch gekennzeichnet, dass** das Kronenrad (21) gegen den Stellring (29) federbeaufschlagt ist.

7. Getriebe nach Anspruch 5 oder 6, **dadurch gekennzeichnet, dass** eine Justierschraube (33), welche in einer stirnseitigen Bohrung (34) der ersten Antriebswelle (18) sitzt, über einen in einem Querschlitz (36) der ersten Antriebswelle (18) beweglichen Bolzen (35) auf die Stirnseite des Stellrings (29) wirkt.

8. Antriebseinheit für ein muskelkraftgetriebenes Fahrzeug mit Hilfsmotor, insbesondere Pedelec, umfassend ein Getriebe (5) nach einem der Ansprüche 1 bis 7 und einen an die zweite Antriebswelle (19) koaxial angeschlossenen Hilfsmotor (2).

9. Antriebseinheit nach Anspruch 8, **dadurch gekennzeichnet, dass** zwischen der zweiten Antriebswelle (19) und dem Hilfsmotor (2) ein zweiter Freilauf (37) angeordnet ist.

10. Antriebseinheit nach Anspruch 8 oder 9, **dadurch gekennzeichnet, dass** der Hilfsmotor (2) als Hohlwellenmotor ausgeführt ist, welcher von der zweiten Antriebswelle (19) durchsetzt ist.

11. Antriebseinheit nach den Ansprüchen 9 und 10, **dadurch gekennzeichnet, dass** der zweite Freilauf (37) in der Hohlwelle des Hilfsmotors (2) liegt und so den Hilfsmotor (2) an die zweite Antriebswelle (19) anschließt.

12. Antriebseinheit nach einem der Ansprüche 8 bis 11, **dadurch gekennzeichnet, dass** das Motorgehäuse (40) durch eine Öffnung (43) Zugriff auf das dem Ritzel (20) abgewandte Ende der zweiten Antriebswelle (19) bietet.

13. Antriebseinheit nach einem der Ansprüche 8 bis 12, **dadurch gekennzeichnet, dass** die erste Antriebswelle (18) an ihren beiden Enden jeweils mit einer Tretkurbel (7) zum Einspeisen von Muskelkraft und die Abtriebswelle (19) mit einem Kettenrad (10) für einen Kettentrieb ausgestattet ist.

14. Muskelkraftbetriebenes Fahrzeug mit Hilfsmotor, insbesondere Pedelec, mit einem Rahmen und einem daran montierten Tretlager für Tretkurbeln zum Einspeisen von Muskelkraft, **dadurch gekennzeichnet, dass** das Tretlager (6) durch eine Antriebseinheit (16) nach einem der Ansprüche 8 bis 13 gebildet ist.

## Claims

1. A transmission (5) for a muscle-powered vehicle (1) having an auxiliary motor (2), in particular for a pedelec, comprising a housing (17) which can be fitted on the vehicle (1), a first drive shaft (18) mounted in the housing for feeding in muscle power, said first drive shaft (18) being coupled to an approximately coaxial output shaft (22) for driving the vehicle (1), and further comprising, approximately at a right angle to said first drive shaft (18), a second drive shaft (19) for connecting the auxiliary motor, which second drive shaft (19) acts on the output shaft (22) via an angular gear (23), **characterised in that** the angular gear (23) is formed by a crown gear (21) on the output shaft (22) and a sprocket (20) on the second drive shaft (19), which sprocket (20) engages in the crown gear (21).

2. The transmission according to Claim 1, **characterised in that** the first and second drive shafts (18, 19) are mounted rotatably in the housing (17) and are axially fixed, and **in that** the output shaft (22) is a hollow shaft which is penetrated by the first drive shaft (18), on which the output shaft is mounted axially displaceably and is coupled to said first drive shaft for conjoint rotation therewith in at least one direction of rotation.

3. The transmission according to Claim 2, **characterised in that** the output shaft (22) is additionally supported rotatably and axially displaceably on the housing (17).

4. The transmission according to Claim 2 or 3, **characterised in that** the mounting and coupling of the output shaft (22) on and to the first drive shaft (18) is formed by a first freewheel (27) with rolling bearings (26) and axial play.

5. The transmission according to one of Claims 1 to 4, **characterised in that** an adjusting ring (29) mounted adjustably in the axial direction on the first drive shaft (18) engages via an axial bearing (30) with the side of the crown gear (21) facing away from the sprocket (20).

6. The transmission according to Claim 5, **characterised in that** the crown gear (21) is spring-loaded against the adjusting ring (29).

7. The transmission according to Claim 5 or 6, **characterised in that** an adjusting screw (33), which sits in an endface bore (34) in the first drive shaft (18), acts on the end face of the adjusting ring (29) via a pin (35), which is movable in a transverse slot (36) in the first drive shaft (18).

8. A drive unit for a muscle-powered vehicle having an auxiliary motor, in particular for a pedelec, comprising a transmission (5) according to one of Claims 1 to 7 and an auxiliary motor (2) connected coaxially to the second drive shaft (19).

9. The drive unit according to Claim 8, **characterised in that** a second freewheel (37) is arranged between the second drive shaft (19) and the auxiliary motor (2).

10. The drive unit according to Claim 8 or 9, **characterised in that** the auxiliary motor (2) is formed as a hollow shaft motor which is penetrated by the second drive shaft (19).

11. The drive unit according to Claims 9 and 10, **characterised in that** the second freewheel (37) is arranged in the hollow shaft of the auxiliary motor (2) and thus connects the auxiliary motor (2) to the second drive shaft (19).

12. The drive unit according to one of Claims 8 to 11, **characterised in that** the motor housing (40), by means of an opening (43), provides access to the end of the second drive shaft (19) facing away from the sprocket (20).

13. The drive unit according to one of Claims 8 to 12, **characterised in that** the first drive shaft (18) is equipped at each of its two ends with a treadle (7) for feeding in muscle power, and the output shaft (19) is equipped with a chain wheel (10) for a chain drive.

14. A muscle-powered vehicle with auxiliary motor, in particular a pedelec, having a frame and a bottom bracket fitted thereon for treadles for feeding in muscle power, **characterised in that** the bottom bracket (6) is formed by a drive unit (16) according to one of Claims 8 to 13.

## Revendications

1. Train d'engrenages (5) pour un véhicule (1) entraîné par la force musculaire avec un moteur auxiliaire (2), notamment Pedelec, avec un carter (17) pouvant être monté sur le véhicule (1) et un premier arbre d'entraînement (18) y étant logé pour apporter de la force musculaire, lequel est couplé avec un arbre de sortie (22) sensiblement coaxial pour l'entraînement du véhicule (1), et à environ un angle droit par rapport à celui-ci, un deuxième arbre d'entraînement (19) pour le raccordement du moteur auxiliaire, lequel deuxième arbre agit également par l'intermédiaire d'un engrenage d'angle (23) sur l'arbre de sortie (22), **caractérisé en ce que** l'engrenage d'angle (23) est formé par une roue de chant (21) sur l'arbre de sortie (22) et d'un pignon (20) étant en prise dans celle-ci sur le deuxième arbre d'entraînement (19).

2. Train d'engrenages selon la revendication 1, **caractérisé en ce que** les premier et second arbres d'entraînement (18, 19) sont logés en pouvant être mis en rotation dans le carter (17) et sont disposés de manière fixe axialement, et que l'arbre de sortie (22) est un arbre creux qui est traversé par le premier arbre d'entraînement (18), sur lequel il est logé mobile axialement et avec lequel il est couplé sans pouvoir tourner dans au moins une direction de rotation.

3. Train d'engrenages selon la revendication 2, **caractérisé en ce que** l'arbre de sortie (22) est en plus appuyé sur le carter (17) en pouvant être mis en rotation et en étant mobile axialement.

4. Train d'engrenages selon la revendication 2 ou 3, **caractérisé en ce que** le logement et le couplage de l'arbre de sortie (22) est formé sur et avec le premier arbre d'entraînement (18) par un première roue libre (27) avec des paliers à roulement (26) et un jeu axial.

5. Train d'engrenages selon l'une des revendications 1 à 4, **caractérisé en ce qu'**une collerette de réglage (29) logée sur le premier arbre d'entraînement (18) en étant réglable en direction axiale est en prise sur le côté de la roue de chant (21) opposé au pignon (20).

6. Train d'engrenages selon la revendication 5, **caractérisé en ce que** la roue de chant (21) est soumise à un ressort agissant contre la collerette de réglage (29).

7. Train d'engrenages selon la revendication 5 ou 6, **caractérisé en ce qu'**une vis d'ajustement (33), laquelle est située sur un alésage (34) du côté frontal du premier arbre d'entraînement (18), agit sur le côté frontal de la collerette de réglage (29) par l'intermédiaire d'un boulon (35) mobile dans une fente transversale (36) du premier arbre d'entraînement (18).

8. Unité d'entraînement pour un véhicule entraîné par la force musculaire avec un moteur auxiliaire, notamment Pedelec, comprenant un train d'engrenages (5) selon l'une des revendications 1 à 7 et un moteur auxiliaire (2) raccordé co-axialement sur le deuxième arbre d'entraînement (19).

9. Unité d'entraînement selon la revendication 8, **caractérisée en ce qu'**une seconde roue libre (37) est disposée entre le deuxième arbre d'entraînement (19) et le moteur auxiliaire (2) .

10. Unité d'entraînement selon la revendication 8 ou 9, **caractérisée en ce que** le moteur auxiliaire (2) est conçu sous la forme d'un moteur à arbre creux, lequel est traversé par le second arbre d'entraînement (19).

11. Unité d'entraînement selon les revendications 9 et 10, **caractérisée en ce que** la seconde roue libre (37) se situe dans l'arbre creux du moteur auxiliaire (2) et raccorde ainsi le moteur auxiliaire (2) au deuxième arbre d'entraînement (19).

12. Unité d'entraînement selon l'une des revendications 8 à 11, **caractérisée en ce que** le carter de moteur (40) permet un accès vers l'extrémité du deuxième arbre moteur (19) opposé au pignon (20) par un orifice (43).

13. Unité d'entraînement selon l'une des revendications 8 à 12, **caractérisée en ce que** le premier arbre d'entraînement (18) est équipé à ses deux extrémités chaque fois d'un pédalier (7) pour l'apport en force musculaire et l'arbre de sortie (19) est équipé avec un barbotin (10) pour un entraînement par chaîne.

14. Véhicule entraîné par la force musculaire avec un moteur auxiliaire, notamment Pedelec, avec un cadre et un palier pour des pédaliers étant monté au cadre dans le but d'un apport de force musculaire, **caractérisé en ce que** le palier (6) est formé par une unité d'entraînement (16) selon l'une des revendications 8 à 13.
